# FASCICULE DE BREVET EUROPEEN

(11) **EP 3 612 483 B1**
(45) Date de publication et mention de la délivrance du brevet: **23.11.2022**
(21) Numéro de dépôt: 18718691.1
(22) Date de dépôt: 09.04.2018
(51) Int. Cl.: B65H 29/58, B65H 29/04, B26D 5/00, B26D 7/18

(54) **DISPOSITIF ET PROCÉDÉ DE CONTRÔLE D'ÉCHANTILLONS DE POSES, STATION D'ÉVACUATION, ET MACHINE DE TRAITEMENT D'ÉLÉMENTS EN FORME DE FEUILLES**
VORRICHTUNG UND VERFAHREN ZUR KONTROLLE VON PROBEBÖGEN, ENTSORGUNGSSTATION, UND MASCHINE ZUR BEARBEITUNG VON BOGENFÖRMIGEN GEGENSTÄNDEN
DEVICE AND METHOD FOR CHECKING BLANK SAMPLES, DISCHARGE STATION, AND MACHINE FOR TREATING ELEMENTS IN SHEET FORM

(30) Priorité: 21.04.2017 EP 17020159
(43) Date de publication de la demande: 26.02.2020
(73) Titulaire: BOBST MEX SA, 1031 Mex (CH)
(72) Inventeur: CHATRY, Patrice, 74500 Lugrin (FR)
(74) Mandataire: Hasler, David
(86) Numéro de dépôt international: PCT/EP2018/025102
(87) Numéro de publication internationale: WO 2018/192684

(56) Documents cités:
- EP-A1- 0 452 769
- EP-A1- 1 524 224
- JP-A- H09 311 030

## Description

La présente invention concerne un dispositif de contrôle d'échantillons de poses pour une machine de traitement d'éléments en forme de feuilles, une station d'évacuation des déchets, une machine de traitement d'éléments en forme de feuilles ainsi qu'un procédé de contrôle de qualité d'échantillons de poses d'une machine de traitement d'éléments en forme de feuilles.

Dans l'industrie de fabrication des emballages, les feuilles sont découpées selon une matrice correspondant à la forme développée que l'on souhaite obtenir, par exemple en vue d'obtenir une pluralité de boîtes d'une forme donnée.

Après découpe et éjection des déchets, les points d'attache entre les poses d'une feuille sont rompus et les poses s'empilent en piles verticales dans une zone de réception où elles sont séparées et stabilisées par un encartage périodique. La partie restante de la feuille, appelée aussi déchet, reste pincée dans les pinces de la barre de pinces du dispositif de transport des feuilles pour être entraînée vers le poste d'évacuation des déchets.

La barre de pinces est entrainée de façon habituelle par deux chaines en boucles disposées respectivement des deux côtés de la presse à découper et auxquelles sont fixées les deux extrémités des barres de pinces. Un éjecteur à la volée en forme de peigne s'étendant transversalement par rapport au sens de déplacement des déchets transportés par la barre de pinces, est agencé dans la station d'évacuation des déchets.

La trajectoire de la barre de pinces est synchronisée avec son ouverture dans la station d'évacuation des déchets pour qu'à la montée dans le virage de la boucle des trains de chaines, les pinces de la barre s'ouvrent en croisant l'éjecteur à la volée. La feuille entrainée par la barre de pinces est éjectée à la volée et bascule sur le tapis d'évacuation.

L'éjection est dite « à la volée » car on utilise directement la trajectoire en demi-tour de la barre de pinces dans le poste d'évacuation des déchets pour faire basculer la feuille découpée sur le tapis d'évacuation. L'éjection à la volée permet de faire l'économie d'une barre de pinces. En effet sans l'éjection à la volée, pour ôter la feuille découpée de la barre de pinces, la machine devrait comporter par exemple une station supplémentaire d'évacuation des déchets dans laquelle la barre de pince s'arrêterait pour déposer la feuille de déchet. Les trains de chaines devraient alors être allongés d'une barre de pinces additionnelle, ce qui est couteux et encombrant.

Afin de contrôler la qualité de façonnage des poses, il s'avère nécessaire de prélever régulièrement des échantillons de poses en cours de production. Certains industriels, tels que les industriels de fabrication de tabac ou de cigarettes, requièrent en effet des prélèvements relativement fréquents.

A chaque prélèvement d'échantillons, la production doit être fortement ralentie ou stoppée temporairement le temps qu'un opérateur retire les échantillons de la pile de poses, ce qui est couteux en temps et en ressources. De plus, les échantillons prélevés de la pile de poses peuvent être perdus en cours de manipulation ou mélangés avec les déchets de feuilles. Cette opération de prélèvement des échantillons est donc peu efficace et peu ergonomique car elle ralentit la cadence de production, nécessite la mobilisation d'un opérateur et des poses peuvent être perdues. JPH09311030 divulgue le préambule de la revendication 1.

Une autre solution pourrait être de réceptionner une feuille et ses poses dans la station d'éjection des déchets au lieu que les poses soient séparées et réceptionnées dans la station de réception. Cela nécessite un arrêt de la machine. Il faut en outre dégager la feuille de la barre de pinces pour pouvoir la retirer au moyen d'un mécanisme d'ouverture annexe.

Il est donc actuellement difficile de prélever un échantillonnage régulier en cours de production et donc difficile de réaliser un contrôle qualité de ces échantillons.

Un des buts de la présente invention est donc de proposer un dispositif de contrôle d'échantillons de poses dans une machine de façonnage permettant un contrôle aisé et régulier de poses en cours de production.

A cet effet, la présente invention a pour objet un dispositif de contrôle d'échantillons de poses pour une machine de traitement d'éléments en forme de feuilles, la machine de traitement comportant une pluralité de stations de travail dont au moins une station d'évacuation des déchets comportant un tapis d'évacuation, le dispositif de contrôle étant caractérisé en ce qu'il comporte un dispositif de surveillance optique configuré pour déterminer un défaut de qualité d'un échantillon de poses posé à plat sur le tapis d'évacuation, le diapositif de surveillance optique comporte une caméra ou un appareil photographique et le dispositif de contrôle comporte une unité de contrôle reliée au dispositif de surveillance optique, l'unité de contrôle étant configurée pour comparer une image prise par le système de surveillance optique avec au moins une image de référence pour déterminer la présence d'un défaut de qualité.

Un contrôle de qualité peut donc être réalisé de manière automatique, sans nécessiter l'intervention d'un opérateur. Des contrôles réguliers peuvent ainsi être programmés à intervalles réguliers.

Selon une ou plusieurs caractéristiques du dispositif de contrôle, prise seule ou en combinaison :
- le dispositif de contrôle comporte une unité d'alerte reliée à l'unité de contrôle, l'unité d'alerte étant configurée pour générer une alerte en cas de présence d'un défaut de qualité.

L'invention a aussi pour objet une station d'évacuation des déchets pour machine de traitement d'éléments en forme de feuilles, caractérisée en ce qu'elle comporte un dispositif de contrôle d'échantillons de poses tel que décrit précédemment.

La station d'évacuation des déchets peut comporter en outre un dispositif d'éjection d'échantillons de poses pour une machine de traitement d'éléments en forme de feuilles, la machine de traitement comportant :
- une pluralité de stations de travail dont au moins une station d'évacuation des déchets, et
- un dispositif de transport comprenant une pluralité de barres de pinces configurées pour entrainer les éléments en forme de feuilles dans les stations de travail,
le dispositif d'éjection comportant au moins un élément d'actionnement mobile entre :
- une position inactive dans laquelle le au moins un élément d'actionnement est positionné à l'écart du trajet de la barre de pinces, et
- une position active dans laquelle le au moins un élément d'actionnement est positionné sur le trajet de la barre de pinces, le au moins un élément d'actionnement étant configuré pour coopérer avec la barre de pinces au passage de la barre de pinces pour ouvrir la barre de pinces et éjecter à plat un échantillon de poses.

Le au moins un élément d'actionnement peut ainsi prendre une position active pour ouvrir les pinces de la barre de pinces et éjecter un échantillon de poses. Un échantillon de poses peut ainsi être éjecté de manière simple et automatique.

En position active, le au moins un élément d'actionnement est par exemple positionné sur le trajet de la barre de pinces à la sortie d'un outil de séparation des poses de la station de séparation des poses et en amont d'un éjecteur à la volée de la station d'évacuation des déchets, c'est-à-dire avant l'éjecteur à la volée. En position active, le au moins un élément d'actionnement est par exemple positionné sur le trajet de la barre de pinces pour ouvrir la barre de pinces lorsque la barre de pinces fait un angle avec l'horizontale compris entre 0° et 60°.

Cet emplacement des éléments d'actionnement permet que le au moins un élément d'actionnement ouvre les pinces de la barre de pinces sur une portion horizontale des trains de chaines ou du moins, au début de la partie courbe des trains de chaines. Cela permet d'une part, de conserver une trajectoire sensiblement droite de l'échantillon de poses qui est lâché et d'autre part que l'échantillon de poses qui s'était arrêté dans la station de séparation des poses reprenne un peu de vitesse de manière à prendre suffisamment d'énergie pour être effectivement entrainé le plus possible en ligne droite lors de l'ouverture de la barre de pinces.

Le dispositif d'éjection peut comporter un organe de commande configuré pour que son actionnement commande le déplacement de l'élément d'actionnement de la position inactive vers la position active ainsi que la prise d'une image de l'échantillon de poses posé à plat sur le tapis d'évacuation par le dispositif de surveillance optique.

L'invention a aussi pour objet une machine de traitement d'éléments en forme de feuilles, caractérisée en ce qu'elle comporte une pluralité de stations de travail dont une station d'évacuation des déchets telle que décrite précédemment et un dispositif de transport comprenant une pluralité de barres de pinces configurées pour entrainer les éléments en forme de feuilles dans les stations de travail.

L'invention a aussi pour objet un procédé de contrôle de qualité d'échantillons de poses d'une machine de traitement d'éléments en forme de feuilles, la machine de traitement d'éléments en forme de feuilles, comportant :
- une pluralité de stations de travail dont une station de séparation des poses et une station d'évacuation des déchets, et
- un dispositif de transport comprenant une pluralité de barres de pinces configurées pour entrainer les éléments en forme de feuilles dans les stations de travail,
caractérisé en ce qu'on détermine un défaut de qualité d'un échantillon de poses posé à plat sur un tapis d'évacuation au moyen d'un dispositif de contrôle tel que décrit précédemment.

L'échantillon de poses peut être prélevé par un procédé de prélèvement d'échantillon de poses dans lequel :
- on bloque la séparation des poses d'au moins une feuille découpée dans la station de séparation des poses,
- on déplace au moins un élément d'actionnement sur le trajet de la barre de pinces à la sortie d'un outil de séparation des poses de la station de séparation des poses et en amont d'un éjecteur à la volée de la station d'évacuation des déchets pour coopérer avec la barre de pinces au passage de la barre de pinces afin d'ouvrir la barre de pinces et éjecter à plat un échantillon de poses.

On peut commander un nombre prédéterminé de trous de feuilles avant l'échantillon de poses à prélever et/ou après l'échantillon de poses à prélever.

### DESCRIPTION SOMMAIRE DES DESSINS

D'autres avantages et caractéristiques apparaîtront à la lecture de la description de l'invention, ainsi que sur les figures annexées qui représentent un exemple de réalisation non limitatif de l'invention et sur lesquelles :
La figure 1 illustre de façon très schématique un exemple de machine de traitement d'éléments en forme de feuilles.
La figure 2 montre une vue schématique de côté d'éléments de la machine de traitement de la figure 1.
La figure 3A montre une vue similaire à la figure 2 en cours de production, montrant un élément d'actionnement d'un dispositif d'éjection d'échantillons de poses, en position inactive.
La figure 3B montre une vue similaire à la figure 3A au cours d'un procédé d'éjection d'échantillons de poses, l'élément d'actionnement étant en position active.
La figure 3C montre une vue similaire à la figure 3B après l'éjection à plat d'un échantillon de poses, l'élément d'actionnement étant déplacé en position inactive.
La figure 4 montre une vue en perspective d'éléments du dispositif d'éjection d'échantillons de poses en position active.
La figure 5A montre une vue de côté des éléments de la figure 4 ainsi qu'une vue en coupe d'une barre de pinces au début d'une coopération en ouverture avec un élément d'actionnement du dispositif d'éjection en position active.
La figure 5B montre une vue similaire à la figure 5A avec la barre de pinces à la fin de la coopération en ouverture avec l'élément d'actionnement.
La figure 6 montre une vue similaire à la figure 2, la figure 6 montrant plus particulièrement un dispositif de contrôle d'échantillons de poses.
La figure 7 montre une vue schématique d'un dispositif de récupération d'échantillons de poses, en position de convoyage continu, en cours de production.
La figure 8 montre une vue schématique du dispositif de récupération de la figure 6 en position relevée, au cours d'un prélèvement d'échantillon de poses.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

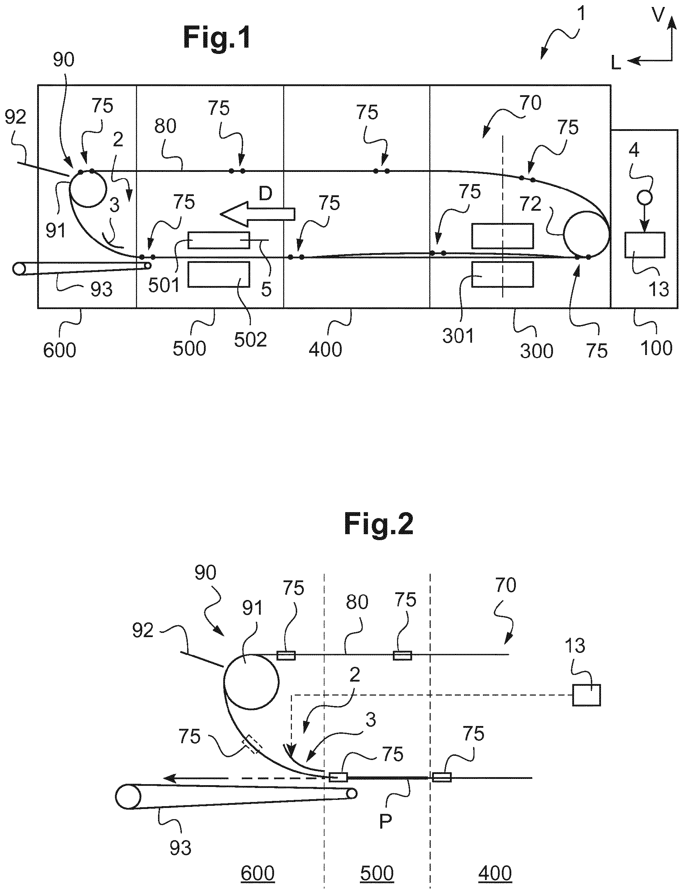

On définit les termes amont et aval en référence à la direction de déplacement des feuilles, tel qu'illustré par la flèche D sur la figure 1. Ces éléments se déplacent vers l'amont, en suivant généralement l'axe principal longitudinal de la machine, dans un mouvement cadencé par des arrêts périodiques. La direction transversale T est la direction perpendiculaire à la direction longitudinale de déplacement des feuilles D. Le plan horizontal correspond au plan (L, T).

Les termes « éléments plats » et « feuilles » seront considérés comme équivalents, et concerneront aussi bien des éléments composés de carton ondulé que de carton plat, de papier ou de toute autre matière utilisée couramment dans l'industrie de l'emballage. Il est entendu que dans l'ensemble de ce texte, les termes « feuille » ou « élément en feuilles » ou « élément en forme de feuilles » désignent de façon très générale tout support d'impression en forme de feuilles tel que, par exemple, des feuilles de carton, de papier, de matière plastique, etc.

La figure 1 représente un exemple de machine de traitement 1 pour la transformation de feuilles. Cette machine de traitement 1 est classiquement composée de plusieurs stations de travail qui sont juxtaposées mais interdépendantes une à une pour former un ensemble unitaire. On trouve ainsi une station d'introduction 100, une station de transformation 300 pour la découpe des feuilles, telle que comprenant une presse à platines 301, une station d'éjection des déchets 400, une station de séparation des poses 500 où les feuilles transformées sont reconditionnées en pile et une station d'évacuation des déchets 600 où les déchets de feuilles découpées (généralement sous forme de grille) sont évacués à la volée.

L'opération de transformation de chaque feuille s'opère dans la station de transformation 300, par exemple entre une platine fixe et une platine montée mobile inférieure de la presse 301 pour la découpe des feuilles selon une matrice correspondant à la forme développée que l'on souhaite obtenir, par exemple en vue d'obtenir une pluralité de boîtes d'une forme donnée. La platine mobile s'élève et s'abaisse successivement une fois au cours de chaque cycle machine.

Un dispositif de transport 70 est par ailleurs prévu pour déplacer individuellement chaque feuille depuis la sortie de la station d'introduction 100 jusqu'à la station d'évacuation des déchets 600, en passant par la station de transformation 300.

Le dispositif de transport 70 comporte une pluralité de barres transversales munies de pinces, communément appelées barres de pinces 75 qui viennent chacune à leur tour saisir une feuille au niveau de son bord frontal, avant de la tirer successivement dans les différents postes des stations 300, 400, 500, 600 de la machine 1.

Les extrémités latérales des barres de pinces 75 sont chacune reliées respectivement à une chaîne latérale formant une boucle, communément appelée train de chaînes 80. Deux trains de chaînes 80 sont ainsi disposés latéralement de chaque côté des barres de pinces 75.

Le dispositif de transport 70 comporte également au moins un dispositif de guidage de chaînes 90 configuré pour guider un train de chaînes 80 respectif.

Grâce à un mouvement transmis aux trains de chaînes 80 au niveau de roues menantes 72, l'ensemble des barres de pinces 75, va partir d'une position arrêtée, accélérer, atteindre une vitesse maximale décélérer, puis s'arrêter, en décrivant ainsi un cycle correspondant au déplacement d'une feuille d'une station de travail à la station de travail suivante. Les trains de chaînes 80 se déplacent et s'arrêtent périodiquement de sorte que, durant chaque déplacement, toutes les barres de pinces 75 sont passées d'une station à la station de travail aval adjacente. Chaque station effectue son travail en synchronisme avec ce cycle que l'on appelle communément cycle machine. Les stations de travail sont en position initiale pour démarrer un nouveau travail à chaque début de cycle machine. On définit communément un cycle machine par un angle machine (AM) variant entre 0° et 360°.

Le nombre et la nature des stations de traitement dans une machine de traitement 1 peuvent varier en fonction de la nature et de la complexité des opérations à effectuer sur les feuilles. Dans le cadre de l'invention, la notion de machine de traitement couvre ainsi un très grand nombre de réalisations du fait de la structure modulaire des stations de travail. Suivant le nombre, la nature et l'agencement des stations de travail utilisées, il est en effet possible d'obtenir une multitude de machines de traitement différentes. Il est également important de souligner qu'il existe d'autres types de stations de travail que celles évoquées, permettant une transformation de la feuille, telles que des stations de gaufrage, refoulage ou telles que des stations de chargement de bandes à estamper pour machine d'estampage ou machine de dorure à chaud (« hot foil stamping » en anglais) où on réalise entre les platines d'une presse, la dépose sur chaque feuille, de motifs à partir d'un film issu d'une ou de plusieurs bandes à estamper. Une même machine de traitement peut comporter une combinaison de plusieurs stations de travail réalisant une transformation de la feuille, telle qu'une station de découpe et une station de gaufrage. Enfin, il est entendu qu'une même machine de traitement peut très bien être équipée de plusieurs stations d'un même type.

On a schématisé des éléments d'un dispositif de transport 70 sur la figure 1. On distingue sur cette figure la pluralité de barres de pinces 75, huit dans l'exemple, permettant de déplacer les feuilles dans les différents postes des stations 300, 400, 500, 600 de la machine de traitement 1, un train de chaînes 80 et un dispositif de guidage de chaînes 90 agencé dans la station d'évacuation des déchets 600, en aval de la station de séparation des poses 500. Les roues menantes 72 entrainant les trains de chaînes 80 en déplacement sont agencées du côté opposé, à proximité de la station d'introduction 100.

Mieux visible sur la figure 2, chaque dispositif de guidage de chaines 90 comporte par exemple une roue de renvoi 91 réalisée par exemple par une poulie ou une roue à chaines ou un simple guide de forme cylindrique, ainsi que par exemple, un guide chaine supérieur agencé de manière sensiblement horizontale dans la machine 1, pour guider le train de chaines 80 en sortie de la roue de renvoi 91 et un guide chaine inférieur, présentant une forme courbe pour guider le train de chaines 80 sur un virage de la boucle, vers la roue de renvoi 91.

Dans la station de séparation des poses 500, après façonnage dans la station de transformation 300 et éjection des petits déchets dans la station d'éjection des déchets 400, les points d'attache entre les poses d'une feuille sont rompus au moyen d'un outil de séparation des poses, tel que comprenant un outil supérieur 501 mâle et un outil inférieur 502 femelle montés verticalement l'un au-dessus de l'autre dans une zone de réception (en se référant à nouveau à la figure 1). Les poses tombent à travers les mailles d'une grille de l'outil inférieur 502 et s'empilent en pile verticale dans la zone de réception sur une palette de réception.

La station d'évacuation des déchets 600 comporte un éjecteur à la volée 92 pour évacuer à la volée les déchets de la feuille découpée dont le bord frontal est en prise avec la barre de pinces 75. L'éjecteur à la volée 92, présente par exemple une forme générale de peigne et s'étendant transversalement par rapport au sens de déplacement des déchets transportés par la barre de pinces 75. La trajectoire de la barre de pinces 75 est synchronisée avec son ouverture dans la station d'évacuation des déchets 600 pour qu'à la montée dans le virage de la boucle des trains de chaines 80, les pinces de la barre s'ouvrent en croisant l'éjecteur à la volée 92. L'éjecteur à la volée 92 est par exemple positionné sur le trajet de la barre de pinces 75 pour ouvrir la barre de pinces 75 et libérer le déchet d'élément en forme de feuille lorsque la barre de pinces 75 commence à se retourner sur la roue de renvoi 91 pour repartir dans l'autre direction. La feuille entrainée par la barre de pinces 75 est éjectée à la volée 92 et bascule sur un tapis d'évacuation 93 de la machine de traitement 1. Les déchets sont ensuite par exemple convoyés par le tapis d'évacuation 93 vers un bac à déchets (figure 1).

L'éjection est dite « à la volée » car on utilise directement la trajectoire en demi-tour de la barre de pinces 75 dans la station d'évacuation des déchets 600 pour faire basculer la feuille découpée sur le tapis d'évacuation 93. L'éjection à la volée permet de faire l'économie d'une barre de pinces 75 en utilisant la trajectoire courbe des barres de pinces 75 pour envoyer les déchets, par nature de faible poids, sur le tapis d'évacuation 93.

La station d'évacuation des déchets 600 peut comporter en outre un dispositif d'éjection 2 d'échantillons de poses.

Le dispositif d'éjection 2 d'échantillons de poses comporte au moins un élément d'actionnement 3 agencé dans la station d'évacuation des déchets 600.

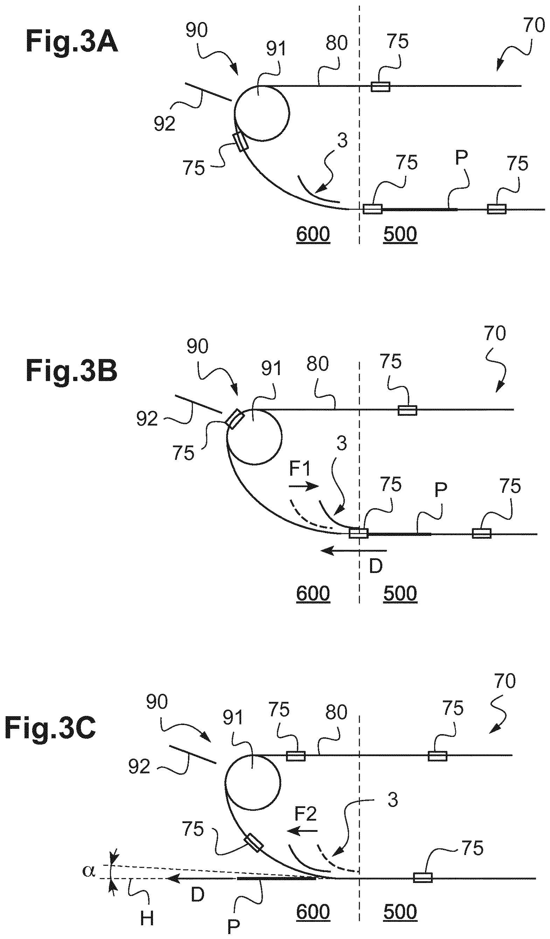

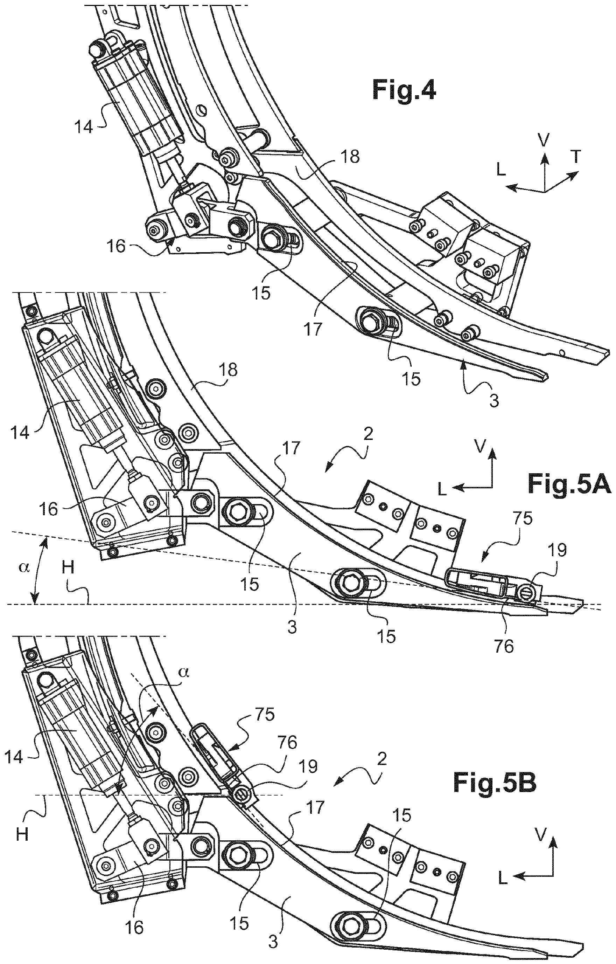

Le au moins un élément d'actionnement 3 est mobile entre une position inactive (figure 3A, 3C) dans laquelle l'élément d'actionnement 3 est positionné à l'écart du trajet de la barre de pinces 75 et une position active dans laquelle l'élément d'actionnement 3 est positionné sur le trajet de la barre de pinces 75 (figure 3B, 4).

En position active, le au moins un élément d'actionnement 3 est positionné sur le trajet de la barre de pinces 75 à la sortie de l'outil de séparation des poses 501, 502 de la station de séparation des poses 500 et en amont de l'éjecteur à la volée 92 de la station d'évacuation des déchets 600 (en se référant également à la figure 1).

Le au moins un élément d'actionnement 3 est par exemple mobile dans la direction transversale T.

Selon un autre exemple, le au moins un élément d'actionnement 3 est mobile dans la direction de déplacement des feuilles D (flèches F1, F2, figures 3B, 3C). L'élément d'actionnement 3 est par exemple positionné à la base du virage du train de chaines 80 du dispositif de transport 70 en direction de la roue de renvoi 91. Ainsi, l'élément d'actionnement 3 en position inactive ne gêne pas le trajet des barres de pinces 75 qui quittent la position horizontale et remontent vers la roue de renvoi 91.

Comme on peut le voir sur la figure 4, le dispositif d'éjection 2 d'échantillons de poses comporte par exemple au moins un actionneur 14, tel qu'un vérin, configuré pour entrainer le déplacement du au moins un élément d'actionnement 3 en position active.

Le dispositif d'éjection 2 comporte en outre par exemple au moins un organe démultiplicateur 16 entrainé par l'actionneur 14 et agencé entre une partie fixe 18 et l'élément d'actionnement 3 mobile pour entrainer le déplacement du au moins un élément d'actionnement 3 en position active. L'organe démultiplicateur 16 comporte par exemple un système de biellettes de type genouillère, apte à prendre une position déployée (figures 5A, 5B) en position active et une position repliée en position inactive.

Le dispositif d'éjection 2 peut en outre comporter des moyens de guidage en déplacement, tel qu'au moins un trou oblong 15 coopérant avec au moins un pion, l'un porté par l'élément de d'actionnement 3, l'autre porté par une partie fixe 18 du dispositif d'éjection 2. Les moyens de guidage en déplacement sont configurés pour guider le déplacement du au moins un élément d'actionnement 3 entre la position active et la position inactive.

Le au moins un élément d'actionnement 3 est par exemple une came.

La came présente un profil actif courbe 17, le déplacement de la barre de pinces 75 le long du profil actif courbe de la came forçant une ouverture progressive suivie d'une fermeture des pinces 76 de la barre de pinces 75.

Le profil actif courbe 17 du au moins un élément d'actionnement 3 coopère avec la barre de pinces 75 en position active pour ouvrir progressivement les pinces 76 de la barre de pinces 75 sur un angle machine par exemple compris entre 50° angle machine (AM) et 70° angle machine (AM), tel que 60° AM, de manière à permettre l'éjection d'une large gamme de grammage de feuilles, l'angle machine entre deux positions arrêtées successives de la barre de pinces 75 étant égal à 360°AM. Le profil actif courbe 17 coopère en ouverture avec la barre de pinces 75 depuis un angle machine λ°AM, tel que 160°AM, sur la figure 5a jusqu'à un angle machine λ°AM + 60°AM sur figure 5b. La partie restante du profil actif courbe 17 de came, sensiblement en retrait, entraine la fermeture de la barre de pinces 75.

Le au moins un élément d'actionnement 3 est configuré pour coopérer avec un élément latéral d'entrainement en rotation 19 au passage de la barre de pinces 75 et entrainer la rotation d'un axe d'ouverture de la barre de pinces 75. L'élément latéral d'entrainement en rotation 19 est agencé à l'extrémité de la barre de pinces 75, tel qu'à l'extrémité de l'axe d'ouverture de la barre de pinces 75. L'entrainement en rotation de l'axe d'ouverture entraine l'ouverture simultanée de toutes les pinces 76 de la barre de pinces 75 et ainsi la libération de la feuille.

La barre de pinces 75 comporte par exemple deux éléments latéraux d'entrainement en rotation 19, un élément latéral d'entrainement en rotation 19 étant agencé à chaque extrémité de l'axe d'ouverture. Selon un exemple de réalisation, l'élément latéral d'entrainement en rotation 19 comporte un levier pivotant portant un galet, le levier pivotant étant solidaire de l'axe d'ouverture et le galet étant apte à coopérer avec le profil actif courbe 17 de l'élément d'actionnement 3.

Le dispositif d'éjection 2 comporte par exemple deux éléments d'actionnement 3 agencés de sorte qu'en position active, chaque élément d'actionnement 3 soit apte à coopérer avec un élément latéral d'entrainement en rotation 19 respectif de la barre de pinces 75. Chaque élément d'actionnement 3 coopère en outre par exemple avec un actionneur 14, un organe démultiplicateur 16 et un moyen de guidage en déplacement 15 respectif.

Ainsi, lorsque la barre de pinces 75 arrive au niveau des éléments d'actionnement 3 de la station d'évacuation des déchets 600, les éléments d'actionnement 3 soulèvent les leviers pivotants pour ouvrir les pinces 76.

En position active, le au moins un élément d'actionnement 3 est par exemple positionné sur le trajet de la barre de pinces 75 pour ouvrir la barre de pinces 75 lorsque la barre de pinces 75 fait un angle α compris entre 0 et 60°, tel que 52°, avec l'horizontale H. L'angle α est l'angle formé entre le plan d'une partie frontale d'une feuille saisie par les pinces 76 de la barre de pinces 75 et l'horizontale H. La feuille est libérée des pinces 76 plus ou moins tôt en fonction de son grammage, une feuille plus épaisse étant libérée plus tard, c'est-à-dire pour une ouverture plus grande des pinces correspondant à un angle α plus élevé.

En position active, le au moins un élément d'actionnement 3 peut être positionné sur le trajet de la barre de pinces 75 pour commencer à ouvrir la barre de pinces 75 lorsque les pinces 76 de la barre de pinces 75 forment un angle α compris entre 0 et 10° avec l'horizontale H, tel que de l'ordre de 8,5° (figures 3C et 5A). La feuille est ainsi libérée lorsque la barre de pinces 75 forme un angle α compris entre 0° et 60° avec l'horizontale (figures 3C et 5A) et avant que le profil actif courbe 17 termine la coopération en ouverture avec la barre de pinces 75 par exemple à un angle machine λ°AM + 60°AM sur figure 5B.

Le au moins un élément d'actionnement 3 peut être agencé à proximité de la position arrêtée précédente de la barre de pinces 75 qui positionne l'élément en forme de feuille dans la station de séparation des poses 500.

En position active, le au moins un élément d'actionnement 3 permet ainsi l'ouverture des pinces 76 de la barre de pinces 75 sur une portion horizontale des trains de chaines 80 ou du moins au début de la partie courbe des trains de chaines 80.

Cet emplacement des éléments d'actionnement 3 permet d'une part, de conserver une trajectoire sensiblement droite de l'échantillon de poses P qui est lâché et d'autre part que l'échantillon de poses P qui s'était arrêté dans la station de séparation des poses 500 reprenne un peu de vitesse de manière à prendre suffisamment d'énergie pour être effectivement entrainé le plus possible en ligne droite lors de l'ouverture de la barre de pinces 75.

L'emplacement des éléments d'actionnement 3 et le profil actif courbe 17 des cames permettent que, lorsque l'échantillon de poses P est lâché, il ne rattrape pas la barre de pinces 75 qui la précède et présente suffisamment de vitesse pour ne pas être rattrapé par la barre de pinces 75 suivante car l'échantillon de poses P éjecté à plat est dans la trajectoire des barres de pinces 75.

En position inactive (figures 3A, 3C), le au moins un élément d'actionnement 3 est positionné à l'écart et ne coopère pas avec la barre de pinces 75 qui reste fermée lorsqu'elle passe à hauteur du au moins un élément d'actionnement 3.

Le au moins un élément d'actionnement 3 est par exemple en position inactive lorsque la machine de traitement 1 est en production.

Le dispositif d'éjection 2 peut en outre comporter un organe de commande 4, tel qu'un bouton, dont l'actionnement permet la commande, via une unité de traitement 13 de la machine de traitement 1 (figure 1), du déplacement de l'élément d'actionnement 3 de la position inactive vers la position active pour l'éjection à plat d'au moins un échantillon de poses P.

L'unité de traitement 13 est par exemple un contrôleur ou un microprocesseur ou un ordinateur.

Le déplacement des éléments d'actionnement 3 de la position inactive vers la position active peut être commandé par exemple sur un cycle machine.

Après actionnement, l'organe de commande 4 peut reprendre une position normale désactivée, par exemple après un nombre prédéterminé de cycles machine.

Le dispositif d'éjection 2 peut comporter un organe de blocage 5 agencé dans la station de séparation des poses 500, configuré pour empêcher la séparation des points d'attaches de l'échantillon de poses P, en bloquant l'outil supérieur 501 de l'outil de séparation des poses en position haute.

L'organe de blocage 5 est par exemple commandé par l'actionnement de l'organe de commande 4, par exemple sur un cycle machine.

L'actionnement de l'organe de commande 4 peut en outre commander par exemple un nombre prédéterminé de trou(s) de feuilles avant l'échantillon de poses P et/ou après l'échantillon de poses P, par exemple deux trous de feuilles avant et après. Un trou de feuille est réalisé en commandant à une barre de pinces 75 de ne pas saisir de feuilles dans la station d'introduction 100.

Le trou de feuilles avant la feuille que l'on souhaite échantillonner permet d'éloigner le dernier déchet d'élément en forme de feuille du tapis d'évacuation 93 (ou du premier tapis d'évacuation 94 comme on le verra plus loin) de sorte que l'échantillon de poses P ne soit pas posé sur un déchet F précédent. De même, le trou de feuilles suivant l'échantillon de poses P permet d'éviter qu'un déchet d'élément en forme de feuille F successif vienne recouvrir l'échantillon de poses P.

On peut aussi prévoir que le blocage de l'outil supérieur 501 et le déplacement de l'élément d'actionnement 3 en position active soient simultanés sur plusieurs cycles machine et coordonnés avec un trou de feuilles amont et aval à l'éjection à plat de l'échantillon de poses P.

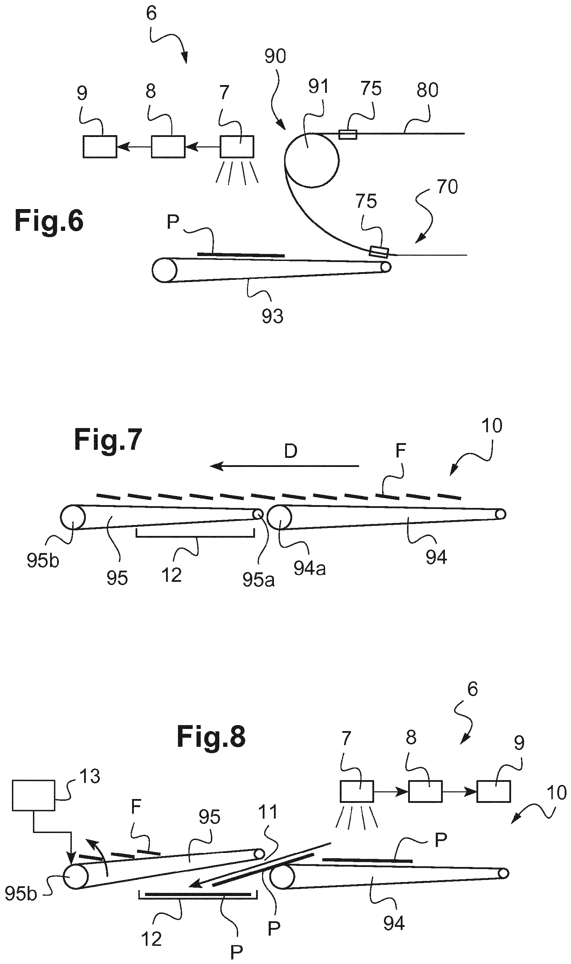

La station d'évacuation des déchets 600 peut comporter en outre un dispositif de contrôle 6 d'échantillons de poses P (figure 6). Le dispositif de contrôle 6 comporte un dispositif de surveillance optique 7 configuré pour déterminer un défaut de qualité d'un échantillon de poses P posé à plat sur le tapis d'évacuation 93.

Le dispositif de surveillance optique 7 comporte par exemple une caméra ou un appareil photographique.

Le dispositif de contrôle 6 peut comporter une unité de contrôle 8 reliée au dispositif de surveillance optique 7, le dispositif de contrôle 6 étant configurée pour comparer une image prise par le dispositif de surveillance optique 7 avec au moins une image de référence pour déterminer la présence d'un défaut de qualité. L'unité de contrôle 8 est par exemple un contrôleur ou un microprocesseur ou un ordinateur de la machine de traitement 1. Ce peut être l'unité de traitement 13. L'unité de contrôle 8 comporte une mémoire stockant au moins une image de référence.

Le dispositif de contrôle 6 peut en outre comporter une unité d'alerte 9 reliée à l'unité de contrôle 8, l'unité d'alerte 9 étant configurée pour générer une alerte, tel qu'un message d'avertissement ou l'allumage d'un voyant, pour prévenir l'opérateur en cas de présence d'un défaut de qualité.

Le dispositif de surveillance optique 7 prend ainsi par exemple une image de l'échantillon de poses P posé à plat sur le tapis d'évacuation 93 et l'unité de contrôle 8 la compare avec au moins une image de référence pour déterminer la présence ou non d'un défaut de qualité et générer un signal d'alerte en cas de présence d'un défaut.

Le défaut de qualité peut être un défaut de découpe ayant eu lieu dans la station de transformation 300, tel qu'un désalignement de la découpe ou une non-découpe partielle ou une découpe non homogène. Le défaut de qualité peut également concerner des défauts d'impression, de bavure, de tons ou d'alignement des couleurs.

Un contrôle de qualité peut donc être réalisé de manière automatique, sans nécessiter l'intervention d'un opérateur. Des contrôles réguliers peuvent ainsi être programmés à intervalles réguliers. Ce contrôle visuel est notamment rendu possible du fait de la possibilité de disposer d'un échantillon de poses P posé à plat sur un tapis d'évacuation 93 au moyen du dispositif d'éjection 2, et notamment aussi du fait que les déchets d'éléments en forme de feuille F soient écartés de l'échantillon de poses P par la mise en oeuvre de trous de feuilles.

La station d'évacuation des déchets 600 peut en outre comporter un dispositif de récupération 10 d'échantillons de poses P (figures 7 et 8). Dans ce cas, au lieu d'un seul tapis d'évacuation 93 comme décrit précédemment, le dispositif de récupération 10 comporte un premier tapis d'évacuation 94 et un deuxième tapis d'évacuation 95.

Le deuxième tapis d'évacuation 95 est agencé à la suite du premier tapis d'évacuation 94 par rapport à la direction de déplacement des feuilles D.

Les tapis d'évacuation 94, 95 sont par exemple, comme le tapis d'évacuation 93, des tapis roulants, formant une boucle fermée autour de deux tambours.

Le premier tapis d'évacuation 94 est fixe. Le deuxième tapis d'évacuation 95 est mobile entre une position de convoyage continu (figure 7) et une position relevée (figure 8).

Dans la position de convoyage continu, des premières extrémités 94a, 95a des premier et deuxième tapis d'évacuation 94, 95 sont rapprochées de sorte que les déchets d'éléments en forme de feuilles F peuvent être convoyés du premier tapis d'évacuation 94 vers le deuxième tapis d'évacuation 95 (figure 7), puis du deuxième tapis d'évacuation 95 vers un bac à déchets.

Les premières extrémités 94a, 95a sont rapprochées en position sensiblement horizontale mais ne se touchent pas pour éviter les frottements et permettre le pivotement du deuxième tapis d'évacuation 95.

Plus précisément, la première extrémité 95a du deuxième tapis d'évacuation 95 peut être positionnée plus bas que la première extrémité 94a du premier tapis d'évacuation 94 dans la position de convoyage continu. Les centres des tambours des premières extrémités 95a, 94a sont par exemple sensiblement alignés sur une droite sensiblement horizontale, le tambour de la première extrémité 94a du premier tapis d'évacuation 94 étant plus gros que le tambour de la première extrémité 95a du deuxième tapis d'évacuation 95. On s'assure ainsi qu'en position de convoyage continu, les déchets d'éléments en forme de feuilles F soient bien convoyés du premier tapis d'évacuation 94 vers le deuxième tapis d'évacuation 95.

Le deuxième tapis d'évacuation 95 est par exemple en position de convoyage continu lorsque la machine de traitement 1 est en production.

Le deuxième tapis d'évacuation 95 est par exemple configuré pour pivoter autour d'une deuxième extrémité 95b opposée à la première extrémité 95a.

Le dispositif de récupération 10 comporte par exemple un actionneur, tel qu'un vérin, éventuellement associé à un système de bielles pour démultiplier l'action de l'actionneur, pour pivoter le deuxième tapis d'évacuation 95. L'actionneur est par exemple commandé par l'unité de traitement 13, via l'actionnement de l'unité de commande 4 du dispositif d'éjection 2 d'échantillons de poses. Le deuxième tapis d'évacuation 95 pivote ainsi par exemple en position relevée à l'arrivée du au moins un échantillon de poses P sur le premier tapis d'évacuation 94.

Dans la position relevée, la première extrémité 95a du deuxième tapis d'évacuation 95 a pivoté vers le haut, par exemple d'un angle compris entre 20° et 50°, créant un interstice 11 entre le premier tapis d'évacuation 94 et le deuxième tapis d'évacuation 95.

L'interstice 11 est suffisamment grand pour que le au moins un échantillon de poses P convoyé par le premier tapis d'évacuation 94 ne puisse pas être convoyé vers le deuxième tapis d'évacuation 95, mais bascule dans l'interstice 11, par exemple vers un bac ou tiroir de récupération 12 des échantillons de pose P (figure 8).

Un opérateur peut alors récupérer le ou les échantillons de poses P directement dans le bac ou tiroir de récupération 12, ceux-ci étant triés des déchets F.

En production, les déchets d'éléments en forme de feuilles F qui retombent généralement en grand désordre du fait de l'éjection à la volée peuvent ainsi être évacués vers le bac à déchets sensiblement en ligne droite (figure 7), ce qui permet d'éviter les bourrages en cours de production et donc les arrêts-machine même lorsque les déchets d'éléments en forme de feuilles F retombent en position debout ou de travers ou autre.

Lors d'un prélèvement d'échantillon de poses P, les échantillons de pose P présentent moins de risques de se coincer dans l'interstice 11 (figure 8) car d'une part, ils peuvent reposer à plat sur le premier tapis d'évacuation 94 et d'autre part, il n'y a qu'un ou quelques échantillons de pose P qui sont prélevés.

En fonctionnement, le procédé de prélèvement d'échantillons de poses 100 comporte les étapes suivantes.

En fonctionnement de production (figures 3A), les éléments d'actionnement 3 du dispositif d'éjection 2 sont en position inactive. Ils sont positionnés à l'écart du trajet de la barre de pinces 75.

Les éléments en forme de feuilles sont façonnés dans la station de transformation 300, les petits déchets sont éjectés dans la station d'éjection des déchets 400, les points d'attache entre les poses d'une feuille sont rompus dans la station de séparation des poses 500 et les déchets d'éléments en forme de feuille F sont éjectés à la volée dans la station d'évacuation des déchets 600 au niveau de l'éjecteur à la volée 92 et basculent sur le tapis d'évacuation 93 ou sur le premier tapis d'évacuation 94 du dispositif de récupération 10 d'échantillons de poses (voir figures 1, 7).

Dans le cas où la machine de traitement 1 comporte un dispositif de récupération 10, le deuxième tapis d'évacuation 95 est en position de convoyage continu (figure 7). Les déchets d'éléments en forme de feuilles F éjectés à la volée sont convoyés du premier tapis d'évacuation 94 vers le deuxième tapis d'évacuation 95 sensiblement en ligne droite, puis du deuxième tapis d'évacuation 95 vers un bac à déchets.

Lorsqu'un opérateur souhaite réaliser un prélèvement d'échantillons de poses P, il actionne l'organe de commande 4 (figure 1).

L'actionnement de l'organe de commande 4 peut déclencher, via l'unité de traitement 13, la commande éventuelle d'un nombre prédéterminé de trou de feuilles avant l'échantillon de poses P, par exemple de deux trous de feuilles, le blocage de l'outil supérieur 501, par exemple sur un seul cycle machine, le déplacement des éléments d'actionnement 3 de la position inactive vers la position active, par exemple sur un seul cycle machine, celui suivant le cycle machine du blocage de l'outil de séparation des poses, la commande d'un nombre prédéterminé de trou de feuilles après la saisie de l'échantillon de poses P, par exemple de deux trous de feuilles, le pivotement du deuxième tapis d'évacuation 95 à l'arrivée de l'échantillon de poses P éjecté à plat sur le premier tapis d'évacuation 94 par le dispositif d'éjection 2 lorsque la machine de traitement 1 est équipée d'un dispositif de récupération 10, ainsi que la prise d'une image de l'échantillon de poses P posé à plat sur le tapis d'évacuation 93 ou sur le premier tapis d'évacuation 94.

Sur deux cycles machine, deux barres de pinces 75 ne saisissent pas de feuille.

Puis une barre de pinces 75 saisit un échantillon de poses P (une feuille pleine) qui est façonnée dans la station de transformation 300, dont les petits déchets sont éjectés dans la station d'éjection des déchets 400, et qui s'immobilise dans la station de séparation des poses 500. Pendant que l'échantillon de poses P est découpé et débarrassé des petits déchets, deux barres de pinces 75 ne saisissent pas de feuille.

L'outil supérieur 501 de la station de séparation des poses 500 étant bloqué, les points d'attache entre les poses de l'échantillon de poses P ne sont pas rompus.

Une fois que la barre de pinces 75 convoyant l'échantillon de poses P (alors une feuille découpée non séparée), a quitté la station de séparation des poses 500, l'outil supérieur 501 est débloqué.

Les éléments d'actionnement 3 sont déplacés vers une position active dans laquelle ils sont positionnés sur le trajet de la barre de pinces 75 (flèche F1, figure 3B).

Ainsi positionnés, les éléments d'actionnement 3 coopèrent avec la barre de pinces 75 quittant la station de séparation des poses 500 au passage de la barre de pinces 75.

Les éléments d'actionnement 3 entrainent le pivotement de l'axe d'ouverture de la barre de pinces 75 pour ouvrir les pinces 76 et ainsi éjecter à plat l'échantillon de poses P sur le tapis d'évacuation 93 (figure 3C) ou sur le premier tapis d'évacuation 94 (figure 8).

L'échantillon de poses P est éjecté à plat, en effectuant un mouvement proche d'une translation directe dans la direction de déplacement des feuilles D.

L'échantillon de poses P est éjecté à plat au niveau des éléments d'actionnement 3 au lieu d'être éjecté à la volée au niveau de l'éjecteur à la volée 92 comme le sont les déchets d'éléments en forme de feuille F en cours de production. L'échantillon de poses P peut ainsi être éjecté de manière « douce », sans que les points d'attache entre les poses ne se cassent et sans que la feuille ne se plie en retombant sur le tapis d'évacuation 93 ou sur le premier tapis d'évacuation 94.

Les éléments d'actionnement 3 retournent ensuite en position inactive à l'écart du trajet des éléments latéraux d'entrainement en rotation 19 des barres de pinces 75 (flèche F2, Figure 3C).

Dans le cas où la machine de traitement 1 comporte un dispositif de récupération 10 des échantillons de poses, l'actionneur pivote le deuxième tapis d'évacuation 95 en position relevée à l'arrivée du au moins un échantillon de poses P sur le premier tapis d'évacuation 94, créant un interstice 11 entre le premier tapis d'évacuation 94 et le deuxième tapis d'évacuation 95. Le au moins un échantillon de poses P convoyé par le premier tapis d'évacuation 94 bascule dans l'interstice 11 vers un bac ou tiroir de récupération 12 des échantillons de pose P (figure 8).

Puis, l'actionneur pivote le deuxième tapis d'évacuation 95 en position de convoyage continu.

L'organe de commande 4 est désactivé.

La machine 1 peut alors reprendre la production (figure 3A).

L'opérateur peut ainsi récupérer la feuille découpée non séparée de ses poses (ou échantillon de poses P) sur le tapis d'évacuation 93 ou dans le bac ou tiroir de récupération 12.

L'opérateur peut alors déterminer lui-même par un contrôle visuel si l'échantillon de poses P présente des défauts de qualité.

Un contrôle de qualité peut également être réalisé de manière automatique, sans nécessiter l'intervention de l'opérateur au moyen du dispositif de contrôle 6.

Pour cela, on détermine un défaut de qualité d'un échantillon de poses P posé à plat sur un tapis d'évacuation 93 ou sur le premier tapis d'évacuation 94 en prenant une image de l'échantillon de poses P posé à plat.

On peut ensuite comparer l'image prise avec au moins une image de référence pour déterminer la présence ou non d'un défaut de qualité et alerter l'opérateur en cas de présence d'un défaut.

## Revendications

1. Dispositif de contrôle (6) d'échantillons de poses (P) pour une machine de traitement (1) d'éléments en forme de feuilles, la machine de traitement (1) comportant une pluralité de stations de travail (300, 400, 500, 600) dont au moins une station d'évacuation des déchets (600) comportant un tapis d'évacuation (93 ; 94) ;
le dispositif de contrôle (6) comportant un dispositif de surveillance optique (7) configuré pour déterminer un défaut de qualité d'un échantillon de poses (P) posé à plat sur le tapis d'évacuation (93 ; 94),
**caractérisé en ce que**
le dispositif de surveillance optique (7) comporte une caméra ou un appareil photographique, et **en ce que**
le dispositif de contrôle (6) comporte une unité de contrôle (8) reliée au dispositif de surveillance optique (7), l'unité de contrôle (8) étant configurée pour comparer une image prise par le dispositif de surveillance optique (7) avec au moins une image de référence pour déterminer la présence d'un défaut de qualité

2. Dispositif de contrôle (6) selon l'une des revendications précédentes, **caractérisé en ce qu'**il comporte une unité d'alerte (9) reliée à l'unité de contrôle (8), l'unité d'alerte (9) étant configurée pour générer une alerte en cas de présence d'un défaut de qualité.

3. Station d'évacuation des déchets (600) pour machine de traitement d'éléments en forme de feuilles (1), **caractérisée en ce qu'**elle comporte un dispositif de contrôle (6) d'échantillons de poses selon l'une des revendications précédentes.

4. Station d'évacuation des déchets (600) selon la revendication précédente, **caractérisée en ce qu'**elle comporte en outre un dispositif d'éjection (2) d'échantillons de poses (P) pour une machine de traitement (1) d'éléments en forme de feuilles, la machine de traitement (1) comportant :
- une pluralité de stations de travail (300, 400, 500, 600) dont au moins une station d'évacuation des déchets (600), et
- un dispositif de transport (70) comprenant une pluralité de barres de pinces (75) configurées pour entrainer les éléments en forme de feuilles dans les stations de travail (300, 400, 500, 600),
le dispositif d'éjection (2) comportant au moins un élément d'actionnement (3) mobile entre :
- une position inactive dans laquelle le au moins un élément d'actionnement (3) est positionné à l'écart du trajet de la barre de pinces (75), et
- une position active dans laquelle le au moins un élément d'actionnement (3) est positionné sur le trajet de la barre de pinces (75), le au moins un élément d'actionnement (3) étant configuré pour coopérer avec la barre de pinces (75) au passage de la barre de pinces (75) pour ouvrir la barre de pinces (75) et éjecter à plat un échantillon de poses (P).

5. Station d'évacuation des déchets (600) selon la revendication précédente, **caractérisée en ce que** le dispositif d'éjection (2) comporte un organe de commande (4) configuré pour que son actionnement commande le déplacement de l'élément d'actionnement (3) de la position inactive vers la position active ainsi que la prise d'une image de l'échantillon de poses (P) posé à plat sur le tapis d'évacuation (93 ; 94) par le dispositif de surveillance optique (7).

6. Machine de traitement (1) d'éléments en forme de feuilles, **caractérisée en ce qu'**elle comporte une pluralité de stations de travail (300, 400, 500, 600) dont une station d'évacuation des déchets (600) selon l'une des revendications 5 à 7 et un dispositif de transport (70) comprenant une pluralité de barres de pinces (75) configurées pour entrainer les éléments en forme de feuilles dans les stations de travail (300, 400, 500, 600).

7. Procédé de contrôle de qualité d'échantillons de poses (P) d'une machine de traitement d'éléments en forme de feuilles, la machine de traitement (1) d'éléments en forme de feuilles, comportant :
- une pluralité de stations de travail (300, 400, 500, 600) dont une station de séparation des poses (500) et une station d'évacuation des déchets (600), et
- un dispositif de transport (70) comprenant une pluralité de barres de pinces (75) configurées pour entrainer les éléments en forme de feuilles dans les stations de travail (300, 400, 500, 600),
**caractérisé en ce qu'**on détermine un défaut de qualité d'un échantillon de poses (P) posé à plat sur un tapis d'évacuation (93) au moyen d'un dispositif de contrôle (6) selon l'une des revendications 1 à 4.

8. Procédé de contrôle selon la revendication précédente, **caractérisé en ce que** l'échantillon de poses (P) est prélevé par un procédé de prélèvement d'échantillon de poses (P) dans lequel :
- on bloque la séparation des poses d'au moins une feuille découpée dans la station de séparation des poses (500),
- on déplace au moins un élément d'actionnement (3) sur le trajet de la barre de pinces (75) à la sortie d'un outil de séparation des poses (501, 502) de la station de séparation des poses (500) et en amont d'un éjecteur à la volée (92) de la station d'évacuation des déchets (600) pour coopérer avec la barre de pinces (75) au passage de la barre de pinces (75) afin d'ouvrir la barre de pinces (75) et éjecter à plat un échantillon de poses (P).

9. Procédé de contrôle selon l'une des revendications 9 ou 10, **caractérisé en ce qu'**on commande un nombre prédéterminé de trous de feuilles avant l'échantillon de poses (P) à prélever et/ou après l'échantillon de poses (P) à prélever.

## Patentansprüche

1. Vorrichtung zur Kontrolle (6) von Formschneideprüflingen (P) für eine Behandlungsmaschine (1) bogenförmiger Elemente, wobei die Behandlungsmaschine (1) eine Vielzahl von Arbeitsstationen (300, 400, 500, 600) umfasst, darunter mindestens eine Abfallentsorgungsstation (600), die ein Entsorgungsband (93 ; 94) umfasst;
wobei die Vorrichtung zur Kontrolle (6) eine Vorrichtung zur optischen Kontrolle (7) umfasst, die konfiguriert ist, um einen Qualitätsfehler eines Formschneideprüflings (P) zu bestimmen, der flach auf das Entsorgungsband (93 ; 94) gelegt ist,
**dadurch gekennzeichnet, dass**
die Vorrichtung zur optischen Kontrolle (7) eine Kamera oder einen Fotoapparat umfasst, und dadurch, dass
die Vorrichtung zur Kontrolle (6) eine Kontrolleinheit (8) umfasst, die mit der Vorrichtung zur optischen Kontrolle (7) verbunden ist, wobei die Kontrolleinheit (8) konfiguriert ist, um ein Bild, das von der Vorrichtung zur optischen Kontrolle (7) aufgenommen wird, mit mindestens einem Referenzbild zu vergleichen, um das Vorhandensein eines Qualitätsfehlers zu bestimmen

2. Vorrichtung zur Kontrolle (6) nach einem der vorstehenden Ansprüche, **dadurch gekennzeichnet, dass** sie eine Warneinheit (9) umfasst, die mit der Kontrolleinheit (8) verbunden ist, wobei die Warneinheit (9) konfiguriert ist, um im Falle des Vorhandenseins eines Qualitätsfehlers eine Warnung zu generieren.

3. Abfallentsorgungsstation (600) für eine Behandlungsmaschine von bogenförmiger Elemente (1), **dadurch gekennzeichnet, dass** sie eine Vorrichtung zur Kontrolle (6) von Formschneideprüflingen nach einem der vorstehenden Ansprüche umfasst.

4. Abfallentsorgungsstation (600) nach dem vorstehenden Anspruch, **dadurch gekennzeichnet, dass** sie weiter eine Vorrichtung zum Auswerfen (2) von Formschneideprüflingen (P) für eine Behandlungsmaschine (1) bogenförmiger Elemente umfasst, wobei die Behandlungsmaschine (1) umfasst:
- eine Vielzahl von Arbeitsstationen (300, 400, 500, 600), darunter mindestens eine Abfallentsorgungsstation (600), und
- eine Transportvorrichtung (70), die eine Vielzahl von Klemmstäben (75) umfasst, die konfiguriert sind, um die bogenförmigen Elemente in den Arbeitsstationen (300, 400, 500, 600) anzutreiben,
eine Vorrichtung zum Auswerfen (2), die mindestens ein Betätigungselement (3) umfasst, das beweglich ist zwischen:
- einer inaktiven Position, bei der das mindestens eine Betätigungselement (3) von dem Weg des Klemmstabs (75) beabstandet positioniert ist, und
- einer aktiven Position, bei der das mindestens eine Betätigungselement (3) auf dem Weg des Klemmstabs (75) positioniert ist, wobei das mindestens eine Betätigungselement (3) konfiguriert ist, um beim Durchgang des Klemmstabs (75) mit dem Klemmstab (75) zusammenzuwirken, um den Klemmstab (75) zu öffnen und einen Formschneideprüfling (P) flach auszuwerfen.

5. Abfallentsorgungsstation (600) nach dem vorstehenden Anspruch, **dadurch gekennzeichnet, dass** die Vorrichtung zum Auswerfen (2) ein Steuerorgan (4) umfasst, das konfiguriert ist, damit seine Betätigung die Verschiebung des Betätigungselements (3) aus der inaktiven Position in die aktive Position, sowie die Aufnahme eines Bildes des Formschneideprüflings (P), der flach auf das Entsorgungsband (93 ; 94) gelegt ist, durch die optische Überwachungsvorrichtung (7) ansteuert.

6. Behandlungsmaschine (1) bogenförmiger Elemente, **dadurch gekennzeichnet, dass** sie eine Vielzahl von Arbeitsstationen (300, 400, 500, 600), darunter eine Abfallentsorgungsstation (600) nach einem der Ansprüche 5 bis 7, und eine Transportvorrichtung (70) umfasst, umfassend eine Vielzahl von Klemmstäben (75), die konfiguriert sind, um die bogenförmigen Elemente in den Arbeitsstationen (300, 400, 500, 600) anzutreiben.

7. Verfahren zur Qualitätskontrolle von Formschneideprüflingen (P) einer Behandlungsmaschine bogenförmiger Elemente, wobei die Behandlungsmaschine (1) bogenförmiger Elemente umfasst:
- eine Vielzahl von Arbeitsstationen (300, 400, 500, 600), darunter eine Formschneidetrennstation (500) und eine Abfallentsorgungsstation (600), und
- eine Transportvorrichtung (70), die eine Vielzahl von Klemmstäben (75) umfasst, die konfiguriert sind, um die bogenförmigen Elemente in den Arbeitsstationen (300, 400, 500, 600) anzutreiben,
**dadurch gekennzeichnet, dass** ein Qualitätsfehler eines Formschneideprüflings (P), der flach auf ein Entsorgungsband (93) gelegt ist, anhand einer Kontrollvorrichtung (6) nach einem der Ansprüche 1 bis 4 bestimmt wird.

8. Verfahren zur Kontrolle nach dem vorstehenden Anspruch, **dadurch gekennzeichnet, dass** der Formschneideprüfling (P) durch ein Verfahren zur Entnahme eines Formschneideprüflings (P) entnommen wird, bei dem:
- die Trennung der Formschnitte mindestens eines geschnittenen Bogens in der Formschneidetrennstation (500) gesperrt wird,
- mindestens ein Betätigungselement (3) auf dem Weg des Klemmstabes (75) am Ausgang eines Formschneidetrennwerkzeugs (501, 502) der Formschneidetrennstation (500) und einem breitwürfigen Auswerfer (92) der Abfallentsorgungsstation (600) vorgelagert bewegt wird, um mit dem Klemmstab (75) beim Durchlaufen des Klemmstabes (75) zusammenzuwirken, um den Klemmstab (75) zu öffnen, und einen Formschneideprüfling (P) flach auszuwerfen.

9. Verfahren zur Kontrolle nach einem der Ansprüche 9 oder 10, **dadurch gekennzeichnet, dass** eine vorbestimmte Anzahl an Bogenlöchern vor dem zu entnehmenden Formschneideprüfling (P) und/oder nach dem zu entnehmenden Formschneideprüfling (P) angesteuert wird.

## Claims

1. Device (6) for inspecting exposure samples (P) for a machine (1) for processing sheet-shaped elements, the processing machine (1) comprising a plurality of workstations (300, 400, 500, 600) including at least one waste discharge station (600) comprising a discharge mat (93; 94);
the inspection device (6) comprising an optical monitoring device (7) configured to determine a quality defect of an exposure sample (P) lying flat on the discharge mat (93; 94),
**characterised in that**
the optical monitoring device (7) comprises a camera or a photographic appliance, and **in that**
the inspection device (6) comprises an inspection unit (8) connected to the optical monitoring device (7), the inspection unit (8) being configured to compare an image taken by the optical monitoring device (7) with at least one reference image to determine the presence of a quality defect.

2. Inspection device (6) according to one of the preceding claims, **characterised in that** it comprises an alert unit (9) connected to the inspection unit (8), the alert unit (9) being configured to generate an alert in case of the presence of a quality defect.

3. Waste discharge station (600) for machine for processing sheet-shaped elements (1), **characterised in that** it comprises a device (6) for inspecting exposure samples according to one of the preceding claims.

4. Waste discharge station (600) according to the preceding claim, **characterised in that** it further comprises a device (2) for ejecting exposure samples (P) for a machine (1) for processing sheet-shaped elements, the processing machine (1) comprising:
- a plurality of workstations (300, 400, 500, 600), including at least one waste discharge station (600), and
- a transportation device (70) comprising a plurality of gripper bars (75) configured to drive the sheet-shaped elements into the workstations (300, 400, 500, 600), the ejection device (2) comprising at least one actuating element (3) movable between:
- an inactive position in which the at least one actuation element (3) is positioned at the gap of the path of the gripper bar (75), and
- an active position in which the at least one actuation element (3) is positioned on the path of the gripper bar (75), the at least one actuation element (3) being configured to engage with the gripper bar (75) at the passage of the gripper bar (75) to open the gripper bar (75) and eject an exposure sample (P) flat.

5. Waste discharge station (600) according to the preceding claim, **characterised in that** the ejection device (2) comprises a control member (4) configured such that its actuation controls the movement of the actuating element (3) from the inactive position to the active position, as well as the taking of an image of the exposure sample (P) laid flat on the discharge mat (93; 94) by the optical monitoring device (7).

6. Machine (1) for processing sheet-shaped elements, **characterised in that** it comprises a plurality of workstations (300, 400, 500, 600) including a waste discharge station (600) according to one of claims 5 to 7 and a transportation device (70) comprising a plurality of gripper bars (75) configured to drive the sheet-shaped elements into the workstations (300, 400, 500, 600).

7. Method for inspecting the quality of exposure samples (P) of a machine for processing sheet-shaped elements, the machine (1) for processing sheet-shaped elements, comprising:
- a plurality of workstations (300, 400, 500, 600) including an exposure separation station (500) and a waste discharge station (600), and
- a transportation device (70) comprising a plurality of gripper bars (75) configured to drive the sheet-shaped elements into the workstations (300, 400, 500, 600),
**characterised in that** a quality defect of an exposure sample (P) laid flat on a discharge mat (93) by means of an inspection device (6) is determined according to one of claims 1 to 4.

8. Inspection method according to the preceding claim, **characterised in that** the exposure sample (P) is removed by a method for removing exposure samples (P), wherein:
- the separation of the exposures of at least one cut sheet is blocked in the exposure separation station (500),
- at least one actuating element (3) is moved over the path of the gripper bar (75) at the outlet of an exposure separation tool (501, 502) of the exposure separation station (500) and upstream from an in-flight ejector (92) of the waste discharge station (600) to engage with the gripper bar (75) at the passage of the gripper bar (75) in order to open the gripper bar (75) and eject an exposure sample (P) flat.

9. Inspection method according to one of claims 9 or 10, **characterised in that** a predetermined number of sheet holes are controlled before the sample of exposures (P) to be removed and/or after the sample of exposures (P) to be removed.
